# EUROPEAN PATENT SPECIFICATION

(11) **EP 3 597 778 B1**
(45) Date of publication and mention of the grant of the patent: **27.01.2021**
(21) Application number: 19186489.1
(22) Date of filing: 16.07.2019
(51) Int. Cl.: C14C 3/18, C14C 3/08, C08G 69/44

(54) **CHROME-FREE TANNING AGENTS AND TANNING PROCESS**
CHROM-FREIE GERBSTOFFE UND GERBVERFAHREN
AGENTS DE TANNAGE SANS CHROME ET PROCÉDÉ DE TANNAGE

(30) Priority: 18.07.2018 IT 201800007303
(43) Date of publication of application: 22.01.2020
(73) Proprietor: Re. Al. Color S.r.l., 36045 Lonigo VI (IT)
(72) Inventor: RACCA, Lorenzo, 36071 Arzignano (Vicenza) (IT)
(74) Representative: Brazzini, Silvia

(56) References cited:
- US-A- 4 126 413
- US-A1- 2008 045 689
- DATABASE WPI Week 201126 Thomson Scientific, London, GB; AN 2011-B24695 XP002788798, & CN 101 928 225 A (TAICANG YUNTONG CHEMICAL PLANT) 29 December 2010 (2010-12-29)

## Description

### Field of the Invention

The present invention relates to the use of chrome-free products as tanning agents, aqueous tanning formulations comprising them and a process for tanning animal pelts, which uses such formulations.

### State of the Art

It is known that the tanning treatments of animal skins can be classified according to the tanning agents used. In particular, tanning processes with vegetable or synthetic tannins are available, used in ancient times, as well as processes that use tanning agents based on trivalent chromium compounds (Cr⁺³). This type of tanning is by far the most widespread thanks to its simplicity, speed, adaptability to all types of skin and inexpensiveness.

However, the tanning processes making use of chromium are also a subject of great concern because of the toxicity and environmental safety of tanning agents containing trivalent chromium compounds.

This is why the tanning industry has been strongly committed since long to identify new possible tanning agents as a replacement for trivalent chromium, which offer greater guarantees of safety for the environment and of health for the operators in the sector, and at the same time possess good tanning characteristics.

U.S. Pat. No. 4,126,413 discloses, for example, a tanning process of animal skins in which a polycarboxylic compound that has been reacted to yield a partial ester, urethane or amide, is used as a tanning agent, but always with a trivalent chromium compound. In this patent publication, the use of the polycarboxylic compound alone, without trivalent chromium, as the sole tanning agent, is not described or suggested.

Furthermore, in the field of animal skin treatment, it is known the use of polymeric compositions for surface application on already tanned leather, in order to provide a surface finishing; however, they are not described for use as sole tanning agents in the tanning phases of the leather.

For example, the Belgian patent No. BE 566206 describes a surface finishing treatment subsequent to tanning, in which already chrome tanned leathers are impregnated with polyesters or polyesteramides in the presence of polyfunctional isocyanates.

The International patent application No. WO 98/38340 and the US patents No. 3,408,221 and No. US 5,558,675 also describe methods for treating the leather, comprising a finishing step with polyurethanes or polyesteramides.

Processes for the preparation of polyamides comprising amino-alcoholic units and dicarboxylic units are for example described in the US patent No. US 3,240,715 and in the patent application No. US 2008/0045689, in which no reference is made to the use as tanning agents of the polyamides obtained.

The problem of identifying products completely free from trivalent chromium that can be used with good results as tanning agents, with any type of animal hide, is still unsolved.

### Summary of the Invention

Now the Applicant has found a product useful as tanning agent that overcomes the problems highlighted above, whose essential characteristics are specified in the first of the annexed claims, while other important characteristics thereof are specified in the claims dependent from it.

Besides the use of the product defined in the following as tanning agent, a further subject of this invention are aqueous tanning formulations comprising the above said tanning agent, and the pre-tanning or tanning processes of animal skins comprising the application on skins of the above said formulations.

An advantage in the use of the present product as tanning agent according to the present invention consists in that it can be used as the sole tanning agent for animal skins of any kinds, without the need of using at the same time also tanning agents comprising trivalent chromium compounds.

The tanning agent according to the present invention can be formulated with water only, has therefore a low environmental impact and as a matter of fact it can replace the chromium tanning agents used until today that, as explained above, are not sustainable from the ecological and toxicological point of view. A further fundamental advantage of the tanning agent of this invention is therefore its environmental sustainability and the enhancement of safety, and more in general the improvement of the working conditions of the operators in this sector.

The tanning agent according to the present invention can therefore be used for skins of any kind, intended for the manufacture of any kind of articles, including for instance the sanitary articles for children and for allergic people, or articles to be used in confined spaces such as the passenger compartment of the car. As a matter of fact, thanks to the low volatility of the substances contained, the skins tanned with the tanning agent according to the present invention are characterized by a low release of substances.

Moreover, at the same time, the skins tanned with the tanning agent according to the present invention have great features of lightness and softness.

Further advantages and features of this invention will be clear from the following detailed, non-limitative, description of some embodiments thereof.

### Detailed description of the Invention

The product for the use as tanning agent for skins according to the present invention is the product obtainable by reaction of diethanolamine with a dicarboxylic acid comprising from 2 to 6 carbon atoms with a molar ratio of diethanolamine with respect to the dicarboxylic acid comprised between 1.8:1 and 2.2:1. More preferably, such ratio used between diethanolamine and dicarboxylic acid is of 2(±0.1) : 1(±0.1).

Preferably, the dicarboxylic acid of this invention is a straight aliphatic dicarboxylic acid. More preferably, the dicarboxylic acid used for the preparation of the tanning agent according to the present invention is selected from the group consisting of succinic acid, glutaric acid and adipic acid.

In a first preferred aspect of the invention the reaction between diethanolamine and dicarboxylic acid is carried out at a temperature comprised between 60°C and 90°C. In a second preferred aspect of the invention the reaction between diethanolamine and dicarboxylic acid is carried out at a temperature comprised between 150°C and 160°C.

The reaction between diethanolamine and dicarboxylic acid is preferably carried out under an inert gas flow, for instance nitrogen, or under vacuum. In general, the reaction can be carried out at atmospheric pressure.

The reaction can be carried out in the presence of a suitable solvent. The same diethanolamine can be used as solvent for the reaction.

The reaction can be moreover carried out in the absence or in the presence of a catalyst.

The trend of the reaction between diethanolamine and dicarboxylic acid is controlled thanks to the distillation of water, at substantially constant temperature, that indicates the progress of the polymerization. At the end of polymerization, a rise in temperatures is observed.

According to an embodiment of the invention, the product obtainable from the reaction of diethanolamine with a dicarboxylic acid consists of a mixture of esters, amides, polyesters, polyamides, polyesters-amides, polyesters-amides-ethers.

In an aspect of the invention, the product obtainable by a reaction of diethanolamine with glutaric acid comprises the 2-[(2-hydroxyethyl)amino]ethyl ester of 5-[bis(2-hydroxyethyl)amino]-5-oxo-pentanoic acid, having the following formula:

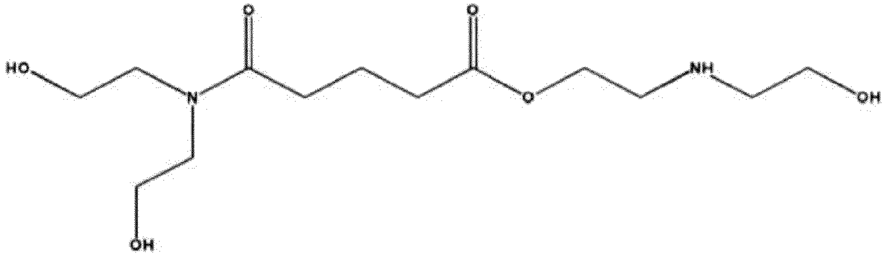

In a further aspect of the invention, the product obtainable by reaction of diethanolamine with adipic acid comprises *N¹,N¹*,*N⁶,N⁶*-tetrakis(2-hydroxyethyl)-hexanediamide, having the following formula:

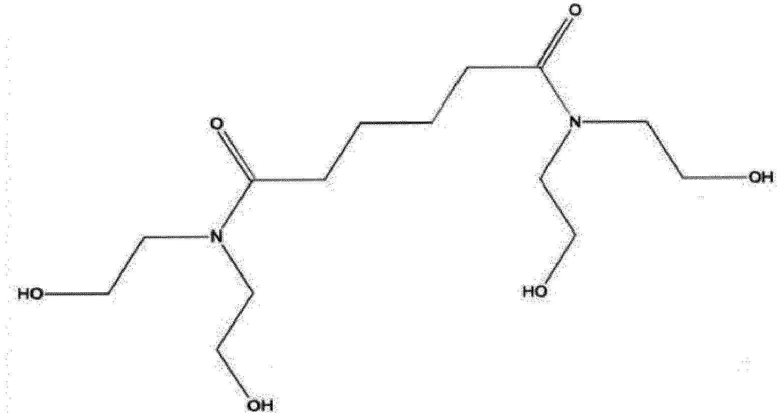

The analytic characterization of the product obtainable by the reaction described above can be carried out by analytical procedures known in the field, for instance by ESI-MS analysis, NMR and FT-IR spectroscopy.

The present invention also relates to an aqueous formulation comprising as the tanning agent at least a product obtainable by reaction of diethanolamine with a dicarboxylic acid comprising from 2 to 6 carbon atoms with a molar ratio of diethanolamine with respect to the dicarboxylic acid comprised between 1.8:1 and 2.2:1, formulated with water, for instance in a weight ratio tanning agent : water comprised between 2:3 and 1:1. The present tanning formulation can moreover comprise one or more adjuvants, carriers and/or additives acceptable for the use in the tanning field; any expert with ordinary skills in the filed can without any efforts select one or more adjuvants, carriers, and/or additives to be added in the present formulation for formulating the tanning agent. In a particularly preferred aspect of this invention, the present tanning formulation comprises at least a product as defined above as the sole tanning agent, and water.

According to the invention, the tanning formulation for animal skins comprising as tanning agent the product obtainable from the reaction of diethanolamine with glutaric acid preferably has a weight ratio tanning agent: water of about 1:1.

The tanning formulation for animal skins comprising as tanning agent the product obtainable from the reaction of diethanolamine with adipic acid has preferably a weight ratio tanning agent: water of about 2:3.

According to another aspect, the invention relates to a pre-tanning and/or tanning and/or re-tanning process of the skins wherein an aqueous formulation is used of a tanning agent obtainable by reaction of diethanolamine with a dicarboxylic acid comprising from 2 to 6 carbon atoms and having the above-mentioned characteristics.

In a pretanning or retanning process, the aqueous formulation of the tanning agent according to the invention is used on previously tanned skins or on skins to be tanned later with tanning agents of mineral origin or on skins previously tanned or to be tanned later with tanning agents based on catechic or pyrogallic tannins.

The pre-tanning process of animal skins according to the present invention preferably comprises the following steps:
a. formation of an aqueous solution of the tanning agent according to the aqueous formulation described above;
b. introduction of the tanning aqueous solution and of the tanned skins in a container for tanning operations (drum), wherein the amount of tanning agent is comprised between 1% and 10%, preferably between about 2% and 8% by weight with respect to the weight of the pickled skins;
c. operation of the rotation of the container for tanning (drum), until absorption of the tanning solution is completed;
d. possible addition of natural and/or synthetic tannins, in amount comprised between 2% and 8% by weight with respect of the pickled skins;
e. operation of the rotation of the container for tanning (drum), until absorption is completed;
f. acidification with carboxylic acids until a pH comprised between 3.0 and 5.0;
g. discharging the skins from the drum;
h. pressing;
i. splitting; and
j. shaving.

The speed of rotation of the drum in the tanning process according to the present invention is preferably comprised between 4 and 12 rpm.

In a tanning process, according to the present invention, the skins are typically prepared starting from the raw skin by means of the usual operations of greening, depilation, calcination, skiving, cracking, decalcination, maceration and degreasing.

A tanning process of animal skins according to the present invention preferably comprises the following steps:
A. formation of an aqueous solution of the tanning agent according to the aqueous formulation described above;
B. introduction of the tanning solution and of the skins pickled, that is of the skins coming from the pretanning phase or from the pickling phase in a container for tanning (drum), wherein the amount of tanning agent is comprised between 1% and 20% by weight, preferably between about 2% and 14% by weight with respect of the pickled skins;
C. operation of the rotation of the container for tanning (drum), until the absorption of the tanning aqueous solution is completed;
D. possible addition of greasing and/or colouring additives, for instance aniline;
E. acidification with carboxylic acids until a pH comprised between 3.0 and 5.0;
F. discharging the skins from the drum;
G. pressing; and
H. drying.

In step a. of the present process of pre-tanning and in step A. of the present process of tanning of animal hides the weight proportion between the tanning agent and water is preferably comprised between 2:3 and 1:1.

The drum's rotation speed in the tanning process according to the present invention is preferably comprised between 4 and 16 rpm.

In an alternative embodiment of the tanning process, the tanning agent according to the present invention is added in the drum in small doses, until the amount specified above is reached with reference to the weight of the skins.

The tanning process with the tanning agent according to the present invention was tested in the tanning of sheep and goat skins, cow hides and exotic skins. The tanned skins were solid, soft and light. The colour of the skins was white.

The invention will be illustrated in the following with reference to the following non-limitative example.

### Example 1

In a flask containing diethanolamine (220 g) was slowly added, under stirring, adipic acid (132 g). Once reached a complete dissolvement, the reaction mixture was heated at 120°C. It was then established a nitrogen stream and the reaction mixture was further heated, setting a temperature of 160°C. At the temperature of 148°C, water was distilled out. After 6 hours of distillation the temperature slowly arrived to 160°C. The temperature was then lowered to 100°C, about 100 ml of water were added and the nitrogen stream was stopped. Once cooled, the dry residue was checked with a thermal balance at 110°C and the pH oscillating between 6,8 and 7,2.

The so obtained product was analysed by ESI-MS with a LC/MSD Trap VL equipment, Agilent Technologies, by ¹H-NMR and ¹³C-NMR spectroscopy with a NMR Bruker Advance 400 spectrophotometer, equipped with an indirect multinuclear probe having a gradient on the z axis, and by FT-IR spectroscopy, following removal from water with a Perkin Elmer 2000 spectrometer on a NaCI disc.

The present invention has been described above with reference to a preferred embodiment thereof. Other preferred embodiments may exist, all included in the same inventive core and covered by the scope of protection of the claims reported in the following.

## Claims

1. Use as tanning agent for animal skins of a product obtainable by reaction of diethanolamine with a dicarboxylic acid having from 2 to 6 carbon atoms, **characterised in that** in said reaction a molar ratio of diethanolamine with respect to the dicarboxylic acid comprised between 1.8:1 and 2.2: 1 is used.

2. The use according to claim 1, **characterised in that** said dicarboxylic acid is an aliphatic linear dicarboxylic acid.

3. The use according to any one of the preceding claims, **characterised in that** said dicarboxylic acid is selected from the group consisting of succinic acid, glutaric acid and adipic acid.

4. The use according to claim 3, **characterised in that** said product obtainable by reaction of diethanolamine with glutaric acid comprises the 2-[(2-hydroxyethyl)amino]ethyl ester of 5-[bis(2-hydroxyethyl)amino]-5-oxo-pentanoic acid.

5. The use according to claim 3, **characterised in that** said product obtainable by reaction of diethanolamine with adipic acid comprises *N¹,N¹,N⁶,N⁶*-tetrakis(2-hydroxyethyl)-hexanediamide.

6. The use according to any one of the preceding claims, wherein said product is used as the sole tanning agent of animal skins in wet white tanning processes.

7. A tanning formulation for animal skins comprising as tanning agent a product obtainable by reaction of diethanolamine with a dicarboxylic acid having from 2 to 6 carbon atoms, with a molar ratio of diethanolamine with respect to the dicarboxylic acid comprised between 1.8:1 and 2.2: 1, and water.

8. The tanning formulation for animal skins according to claim 7, comprising as tanning agent the product as defined in claim 5 and water in weight ratio of 1:1.

9. The tanning formulation for animal skins according to claim 7, comprising as tanning agent the product as defined in claim 6 and water in weight ratio of 2:3.

10. A process of pre-tanning or tanning of animal skins comprising a step of applying to said skins a tanning formulation according to any one of the claims 7-9.

11. The process of pre-tanning or tanning according to claim 10, wherein said tanning formulation is applied to said skins in an amount of tanning agent comprised between 1% and 20% by weight with respect to the weight of the skins to be subjected to the tanning process, and comprised between 2% and 8% by weight with respect to the weight of the skins to be subjected to the pre-tanning process.

## Patentansprüche

1. Verwendung eines Produktes als Gerbmittel für Tierhäute, das erhalten wird durch eine Reaktion von Diethanolamin mit einer Dikarbonsäure mit 2 bis 6 Kohlenstoffatomen, **dadurch gekennzeichnet, dass** bei der besagten Reaktion ein Molverhältnis von Diethanolamin in Bezug auf die Dikarbonsäure verwendet wird, das zwischen 1,8 : 1 und 2,2 : 1 liegt.

2. Die Verwendung gemäß Anspruch 1, **dadurch gekennzeichnet, dass** die besagte Dikarbonsäure eine aliphatische lineare Dikarbonsäure ist.

3. Die Verwendung gemäß einem der vorhergehenden Ansprüche, **dadurch gekennzeichnet, dass** die besagte Dikarbonsäure ausgewählt ist aus der Gruppe bestehend aus Bernsteinsäure, Glutarsäure und Adipinsäure.

4. Die Verwendung gemäß Anspruch 3, **dadurch gekennzeichnet, dass** das besagte Produkt, welches durch Reaktion von Diethanolamin mit Glutarsäure erhalten werden kann, den 2-[(2-hydroxyethyl)amino]ethylEster der 5-[bis(2-hydroxyethyl)amino]-5-oxo-Pentansäure umfasst.

5. Die Verwendung gemäß Anspruch 3, **dadurch gekennzeichnet, dass** das besagte Produkt, welches durch Reaktion von Diethanolamin mit Adipinsäure erhalten werden kann, *N¹,N¹,N⁶,N⁶*-Tetrakis(2-hydroxyethyl)-Hexandiamid umfasst.

6. Die Verwendung gemäß einem der vorhergehenden Ansprüche, wobei das besagte Produkt bei Wet-White-Gerbverfahren als einziges Gerbmittel für Tierhäute verwendet wird

7. Eine Gerbstoffformulierung für Tierhäute, umfassend als Gerbmittel ein Produkt, das erhalten wird durch eine Reaktion von Diethanolamin mit einer Dikarbonsäure mit 2 bis 6 Kohlenstoffatomen, mit einem Molverhältnis von Diethanolamin in Bezug auf die Dikarbonsäure, das zwischen 1,8 : 1 und 2,2 : 1 liegt, und Wasser.

8. Die Gerbstoffformulierung für Tierhäute gemäß Anspruch 7, umfassend als Gerbmittel ein Produkt wie im Anspruch 5 beschrieben und Wasser in einem Gewichtsverhältnis von 1 : 1.

9. Die Gerbstoffformulierung für Tierhäute gemäß Anspruch 7, umfassend als Gerbmittel ein Produkt wie im Anspruch 6 beschrieben und Wasser in einem Gewichtsverhältnis von 2 : 3.

10. Ein Verfahren zum Vorgerben oder Gerben von Tierhäuten, umfassend einen Schritt des Anwendens einer Gerbstoffformulierung gemäß einem der Ansprüche 7 bis 9 auf die besagten Häute.

11. Das Verfahren zum Vorgerben oder Gerben von Tierhäuten gemäß Anspruch 10, wobei die besagte Gerbstoffformulierung auf die besagten Tierhäute angewandt wird in einer Menge des Gerbmittels zwischen 1 Gew.-% und 20 Gew.-% im Verhältnis zu dem Gewicht der Häute, welche dem Gerbverfahren unterzogen werden sollen, und zwischen 2 Gew.-% und 8 Gew.-% im Verhältnis zu dem Gewicht der Häute, welche dem Vorgerbverfahren unterzogen werden sollen,

## Revendications

1. Utilisation, en tant qu'agent de tannage pour peaux animales, d'un produit pouvant être obtenu par réaction de diéthanolamine avec un acide dicarboxylique ayant de 2 à 6 atomes de carbone, **caractérisée en ce que**, dans ladite réaction, un rapport molaire de la diéthanolamine à l'acide dicarboxylique compris entre 1,8/1 et 2,2/1 est utilisé.

2. Utilisation selon la revendication 1, **caractérisée en ce que** ledit acide dicarboxylique est un acide dicarboxylique linéaire aliphatique.

3. Utilisation selon l'une quelconque des revendications précédentes, **caractérisée en ce que** ledit acide dicarboxylique est choisi dans le groupe constitué par l'acide succinique, l'acide glutarique et l'acide adipique.

4. Utilisation selon la revendication 3, **caractérisée en ce que** ledit produit pouvant être obtenu par réaction de diéthanolamine avec de l'acide glutarique comprend l'ester 2-[(2-hydroxyéthyl)amino]éthylique d'acide 5-[bis(2-hydroxyéthyl)amino]-5-oxopentanoïque.

5. Utilisation selon la revendication 3, **caractérisée en ce que** ledit produit pouvant être obtenu par réaction de diéthanolamine avec de l'acide adipique comprend le *N¹*,*N¹*,*N⁶,N⁶*-tétrakis(2-hydroxyéthyl)hexanediamide.

6. Utilisation selon l'une quelconque des revendications précédentes, dans laquelle ledit produit est utilisé en tant que seul agent de tannage de peaux animales dans des procédés de tannage blanc humide.

7. Formulation de tannage pour peaux animales comprenant, en tant qu'agent de tannage, un produit pouvant être obtenu par réaction de diéthanolamine avec un acide dicarboxylique ayant de 2 à 6 atomes de carbone, avec un rapport molaire de la diéthanolamine à l'acide dicarboxylique compris entre 1,8/1 et 2,2/1, et de l'eau.

8. Formulation de tannage pour peaux animales selon la revendication 7, comprenant, en tant qu'agent de tannage, le produit tel que défini dans la revendication 5 et de l'eau en un rapport en poids de 1/1.

9. Formulation de tannage pour peaux animales selon la revendication 7, comprenant, en tant qu'agent de tannage, le produit tel que défini dans la revendication 6 et de l'eau en un rapport en poids de 2/3.

10. Procédé de pré-tannage ou de tannage de peaux animales, comprenant une étape d'application auxdites peaux d'une formulation de tannage selon l'une quelconque des revendications 7 à 9.

11. Procédé de pré-tannage ou de tannage selon la revendication 10, dans lequel ladite formulation de tannage est appliquée auxdites peaux en une quantité d'agent de tannage comprise entre 1 % et 20 % en poids par rapport au poids des peaux devant être soumises au procédé de tannage, et comprise entre 2 % et 8 % en poids par rapport au poids des peaux devant être soumises au procédé de pré-tannage.
